# FASCICULE DE BREVET EUROPEEN

(11) **EP 1 363 524 B1**
(45) Date de publication et mention de la délivrance du brevet: **13.12.2006**
(21) Numéro de dépôt: 02704867.7
(22) Date de dépôt: 20.02.2002
(51) Int. Cl.: A47J 37/08

(54) **DISPOSITIF DE CHARGEMENT DES TRANCHES DE PAIN DANS UN GRILLE-PAIN**
ZUFÜHREINHEIT FÜR BROTSCHEIBEN IN EINEM TOASTER
DEVICE FOR LOADING SLICES OF BREAD IN A TOASTER

(30) Priorité: 26.02.2001 FR 0102606
(43) Date de publication de la demande: 26.11.2003
(73) Titulaire: SEB S.A., 69130 Ecully (FR)
(72) Inventeur: ROUSSEAU, Alain, F-88120 Le Syndicat (FR)
(74) Mandataire: Kiehl, Hubert
(86) Numéro de dépôt international: PCT/FR2002/000639
(87) Numéro de publication internationale: WO 2002/067738

(56) Documents cités:
- DE-A- 2 109 784
- US-A- 4 164 591
- US-A- 4 226 176
- US-A- 4 530 276
- US-A- 6 062 128

## Description

### Domaine technique

L'invention se rattache au domaine de l'électroménager, et plus précisément à celui des grille-pain électriques. Elle concerne plus particulièrement un grille-pain perfectionné équipé d'un dispositif de chargement permettant un acheminement automatique des tranches de pain vers les organes de chauffage.

### Techniques antérieures

De façon générale, un grille-pain comporte des moyens de chauffage qui peuvent fonctionner soit par rayonnement, soit par conduction.

Dans le premier cas, les tranches de pain à griller viennent en regard des organes de chauffage rayonnant et reçoivent ainsi la quantité d'énergie nécessaire à leur cuisson. Dans le second cas, les tranches de pain à griller viennent au contact de l'organe chauffant par conduction pendant un temps nécessaire pour obtenir la cuisson satisfaisante.

Dans les grille-pain de conception simple et traditionnelle, on alimente manuellement l'appareil en tranches de pain, en disposant les tranches dans des logements appropriés. On a déjà proposé des améliorations à ce genre de grille-pain qui consistent à équiper l'appareil de dispositifs de chargement automatique. Grâce à ces dispositifs de chargement, plusieurs tranches de pain peuvent être acheminées successivement dans les zones de chauffage du grille-pain devant lesquelles elles défilent.

Un premier exemple d'un tel grille-pain est décrit dans le document US 2 714 348. Ce grille-pain comprend des moyens de chauffage qui incluent des organes chauffants proprement dits, et un mécanisme de défilement qui permet le transport des tranches de pain grillé devant les organes chauffants.

Ce grille-pain comprend également un réservoir de tranches de pain à griller. Ce réservoir débouche à proximité de la zone de chauffage. Les tranches de pain qui sont stockées sont délivrées au fur et à mesure sous l'action d'un ressort qui a tendance à repousser les tranches de pain à l'extérieur du réservoir.

Ce grille-pain présente donc l'avantage de pouvoir réaliser de façon automatique le grillage d'un nombre important de tranches sans nécessiter l'intervention d'un utilisateur. Cependant, il présente l'inconvénient majeur de ne fonctionner que pour des tranches de pain parfaitement plates, du type "toast". En effet, la disposition des moyens de chauffage et la géométrie du réservoir ne peut en aucun cas s'adapter à des tranches de pain d'une certaine épaisseur, ou qui présentent des formes variées.

En outre, la pression exercée sur les tranches par le ressort situé au fond du réservoir est une source d'écrasement des tranches de pain, qui est préjudiciable à la bonne cuisson et à la présentation du pain grillé.

On a également proposé un autre type de grille-pain automatique dans le document GB 2 308 291. Un tel grille-pain comprend des organes de chauffage horizontaux devant lesquels circule un tapis convoyeur. Ce grille-pain est également équipé d'un réservoir cylindrique comportant de multiples logements radiaux destinés à recevoir des tranches de pain. Ce réservoir ou chargeur est disposé au-dessus des organes de chauffage, et peut être entraîné en rotation. Lors de ce mouvement de rotation, chaque logement passe à l'aplomb d'une fente à l'intérieur de laquelle la tranche de pain chute par gravité sur le tapis convoyeur. Ainsi, au fur et à mesure de la rotation du réservoir de chargement, l'ensemble des tranches sont acheminées à destination des moyens de chauffage et ensuite grillées.

Un tel grille-pain présente l'avantage d'assurer un fonctionnement automatique, mais il présente également l'inconvénient d'être particulièrement sensible à la géométrie des tranches de pain qui doivent impérativement passer par les fentes réalisées sous le réservoir de chargement. En d'autres termes, ce grille-pain ne permet pas de griller des tranches de relativement grande dimension et de géométries variées.

Il est également connu, par le document US 6,062,128, un grille-pain dont la structure interne comporte plusieurs spires entre lesquelles sont logés des éléments chauffants. Une vane montée en rotation permet d'entraîner des tranches de pain à l'intérieur de la structure chauffante.

L'objectif de l'invention est de proposer un grille-pain qui assure une alimentation automatique des moyens de chauffage à partir d'un nombre important de tranches de pain préparées à cet effet, et qui soient insensibles à la taille et à la forme générale des tranches à griller.

### Exposé de l'Invention

L'invention concerne donc un grille-pain automatique qui comprend :
- des moyens de chauffage devant lesquels défilent les tranches de pain à griller ;
- des moyens pour acheminer des tranches de pain vers, les moyens de chauffage.

Conformément à l'invention, ce grille-pain se caractérise en ce que les moyens pour acheminer les tranches de pain vers les moyens de chauffage sont distincts et séparés des moyen de chauffage en étant situés en avant de ces derniers et comprennent un élément rotatif épousant une forme géométrique d'hélice, définissant une pluralité de logements pour des tranches de pain, lesdits logements ayant une longueur correspondant sensiblement au pas de l'hélice.

Autrement dit, le grille-pain possède un chargeur formant une sorte de vis entre les spires desquelles peuvent être mises en place les différentes tranches de pain à griller. Lorsque l'hélice tourne autour de son axe, les différentes spires se déplacent en entraînant les tranches de pain dans la direction de l'axe de l'hélice. Les tranches de pain sont donc acheminées à proximité des moyens de chauffage grâce à l'élément rotatif qui forme en quelque sorte une vis d'Archimède. Une telle vis en forme d'hélice est relativement insensible aux dimensions des tranches de pain à déplacer, ce qui lui permet donc de s'adapter à différents types de pain ou tout au moins à différentes géométries de tranches.

On rappelle que la définition géométrique d'une hélice est celle d'une courbe dont les tangentes font un angle constant avec une direction donnée. Dans le cas d'une hélice circulaire, correspondant au cas où l'hélice est incluse dans un cylindre de révolution, l'hélice se caractérise par son axe et son rayon, son sens d'enroulement et son pas qui correspond à la longueur constante qui sépare deux points d'intersection consécutifs de la courbe avec une génératrice fixe située sur le cylindre.

Complémentairement, les moyens de chauffage incluent des moyens d'entraînement en défilement des tranches de pain. De la sorte, après avoir été acheminées par le chargeur caractéristique, les tranches de pain sont positivement entraînées pour défiler au contact ou en regard des organes chauffants proprement dits.

En pratique, le défilement des tranches de pain devant les organes de chauffage peut s'effectuer soit verticalement, soit horizontalement.

Ainsi, lorsque le défilement est horizontal, les tranches de pain sont acheminées par le chargeur caractéristique sur un côté latéral des moyens de chauffage, puis prises en charge par ces derniers. A l'inverse, lorsque le défilement des tranches de pain s'effectue verticalement, le chargeur caractéristique déplace les tranches de pain à griller jusqu'à proximité du haut des moyens de chauffage.

Par la suite, les tranches sont déplacées verticalement par les moyens de défilement, après éventuellement un léger déplacement par gravité.

Dans une forme préférée, l'axe de l'hélice caractéristique est incliné dans un plan horizontal d'un angle α non nul par rapport à une perpendiculaire au plan de défilement des tranches de pain dans les moyens de chauffage. Autrement dit, grâce à cette disposition, les tranches de pain sortent du chargeur en étant orientées de façon optimale pour pénétrer à l'intérieur des moyens de chauffage.

Plus précisément, l'angle α que forme l'axe de l'hélice peut se déduire du pas et du rayon de l'hélice, ainsi que de l'épaisseur du pain à griller.

Selon une autre caractéristique de l'invention, lorsque le défilement des tranches dans les moyens de chauffage s'effectue verticalement, l'axe de l'hélice peut avantageusement être incliné dans un plan vertical, d'un angle β non nul par rapport à l'horizontale. Cet angle est orienté de telle sorte que l'axe de l'hélice est orienté vers le haut dans le sens d'avancée des tranches de pain. De la sorte, on donne aux tranches de pain présentes dans le chargeur une inclinaison verticale telle que le glissement vers les moyens de chauffage est optimisé. En effet, il convient d'éviter que les tranches de pain basculent vers l'avant lorsqu'elles quittent l'hélice caractéristique.

Avantageusement en pratique, on peut également prévoir au niveau des moyens d'alimentation, une butée située à l'extrémité de l'élément rotatif, apte à empêcher le basculement des tranches de pain lorsque ces dernières atteignent l'extrémité de l'élément rotatif.

On empêche ainsi tout mouvement inopiné des tranches de pain vers l'avant qui pourrait provoquer leur chute en dehors des moyens de chauffage.

Dans une forme avantageuse, le grille-pain conforme à l'invention peut également comporter des moyens pour stocker les tranches de pain issues d'un moyen de chauffage ou pour les déplacer vers un réceptacle. Les tranches de pain sont alors déplacées depuis leur sortie des moyens de chauffage vers une zone destinée à leur accumulation.

Dans une forme préférée, les moyens utilisés pour stocker ou déplacer les tranches vers le réceptacle en question sont formés par un second élément rotatif en forme géométrique d'hélice. Autrement dit, lorsque les tranches de pain sortent des moyens de chauffage, elles viennent prendre place dans les logements formés entre les différentes spires d'une seconde hélice. Ces tranches sont ensuite éventuellement acheminées vers le réceptacle de sortie. Comme pour le chargeur d'entrée, l'orientation de cette seconde hélice peut être optimisée pour que les tranches de pain prennent place dans ces logements en restant parallèle à leur orientation dans les moyens de chauffage.

Différentes variantes de moyens de chauffage peuvent être employées dans le grille-pain conforme à l'invention.

Ainsi, dans une première variante, ces moyens de chauffage peuvent comprendre au moins un organe chauffant par rayonnement, et un convoyeur apte à transporter les tranches de pain devant cet organe chauffant. Avantageusement, les moyens de chauffage comprennent au moins deux organes chauffants situés de chaque côté des tranches de pain à griller.

Selon une autre variante de réalisation, les moyens de chauffage peuvent comprendre au moins un rouleau chauffant au contact duquel viennent les tranches de pain, ce rouleau chauffant étant apte à entraîner les tranches de pain.

Autrement dit, les moyens de chauffage comprennent plusieurs rouleaux qui forment une calandre entre laquelle sont prises les tranches de pain lors de leur chauffage.

### Description sommaire des figures

La manière de réaliser l'invention ainsi que les avantages qui en découlent ressortiront bien de la description des modes de réalisation qui suivent, donnés à titre d'exemple non limitatif, et dans lesquels :
- la figure 1 est une vue en perspective sommaire des parties essentielles d'un grille-pain en ce qui concerne l'invention ;
- la figure 2 est un schéma similaire du grille-pain de la figure 1, illustrant la position des différentes tranches de pain à l'intérieur des chargeurs caractéristiques de l'invention ;
- la figure 3 est une vue de dessus du grille-pain de la figure 1,
- les figures 4a et 4b sont des vues de dessus expliquant l'une des particularités de l'invention,
- la figure 5 est une vue de côté du grille-pain de la figure 1,
- les figures 6a à 6f illustrent des améliorations quant à la tenue du pain lors de son déplacement,
- la figure 7 est une vue de côté d'une variante préférée de réalisation des moyens de chauffage,
- la figure 8 est une représentation schématique d'une variante de configuration du grille-pain conforme à l'invention.

### Manière de réaliser l'invention

Comme déjà évoqué, l'invention concerne un grille-pain perfectionné qui est équipé de moyens spécifiques permettant d'assurer de façon automatique le chauffage d'un nombre relativement important de tranches de pain successivement.

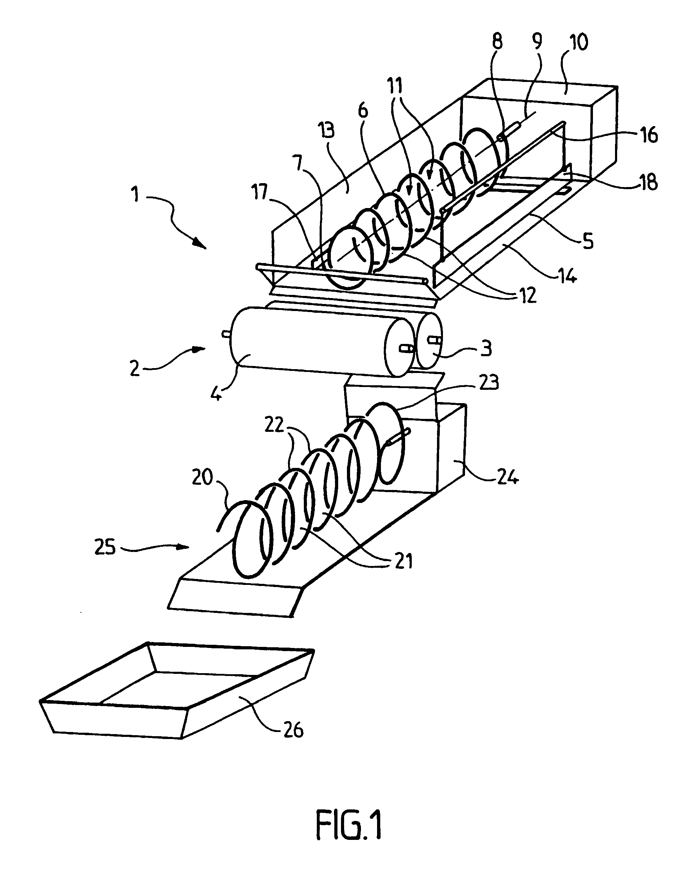

Plus précisément, et en référence à la figure 1, un tel grille-pain (1) comprend des moyens de chauffage (2) incluant deux rouleaux chauffants (3, 4). Bien entendu, et comme déjà évoqué, ces moyens de chauffage peuvent être réalisés différemment, et l'invention n'est pas limitée à cette seule forme de moyens de chauffage qui a été choisie dans un souci de simplification des figures pour permettre une meilleure compréhension.

Conformément à l'invention, ce grille-pain (1) comprend également un chargeur (5) situé en amont des moyens de chauffage (2), qui est destiné à alimenter de façon continue les moyens de chauffage (2) en tranches de pain à griller.

Ce chargeur est donc indépendant des moyens de chauffage; le grille-pain comprend ainsi, si nécessaire, par exemple dans le cas d'un grille-pain à défilement, des moyens d'entraînement du pain en défilement devant les moyens de chauffage.

Plus précisément, ce chargeur (5) comprend un élément rotatif (6) épousant une forme géométrique d'hélice. Cet élément rotatif (6) présente une extrémité (7) située sensiblement à l'aplomb des moyens de chauffage (2). L'extrémité opposée (8) de l'élément rotatif (6) est localisée au niveau de l'axe (9) de l'hélice, et est reliée à un moteur d'entraînement en rotation (10).

L'élément rotatif (6) en forme d'hélice définit une pluralité de logements (11) entre chacune de ces spires (12). Ces logements (11) possèdent une longueur correspondant sensiblement au pas de l'hélice. Le pas de l'hélice peut varier d'un modèle à l'autre en fonction du type de pain à griller. Ainsi, pour des tranches de pain du type pain de mie ou toast, le pas sera inférieur à celui observé sur un grille-pain destiné à griller des tranches plus épaisses.

L'élément rotatif (6) en forme d'hélice peut être constitué d'une tige métallique, enroulée en forme de vis. Cette tige peut être en acier inoxydable ou un matériau compatible avec le contact alimentaire. La capacité du chargeur (5) peut aller de quelques tranches à plus d'une dizaine.

Dans la forme illustrée, le chargeur (5) comprend également un carénage (13) permettant le guidage latéral des tranches de pain. Ce carénage (13) peut être complété par une plaque inférieure (14) destinée à éviter la chute des tranches de pain. Bien entendu, la forme des différents carénages peut être adaptée en fonction des capacités du chargeur et pour des considérations esthétiques.

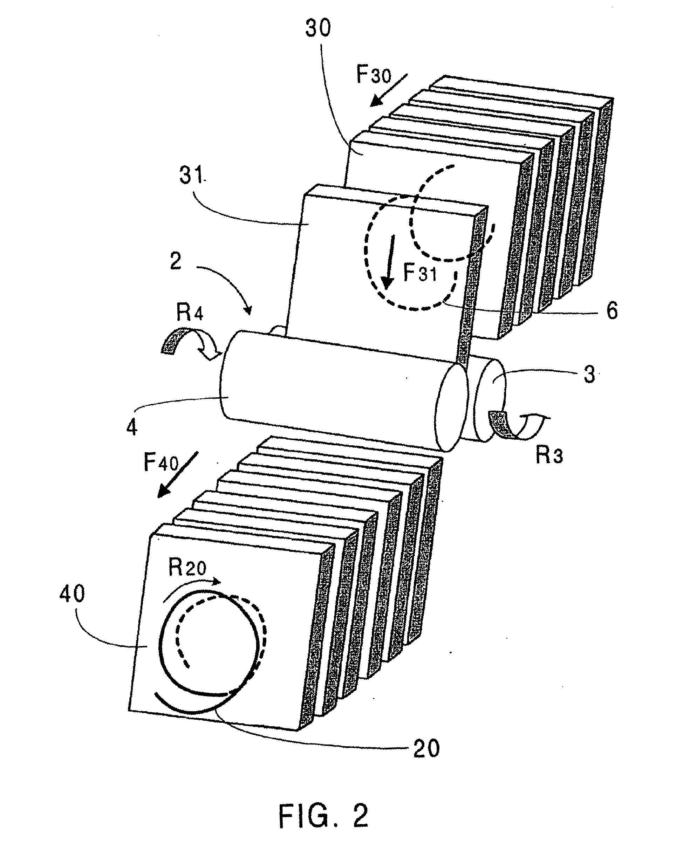

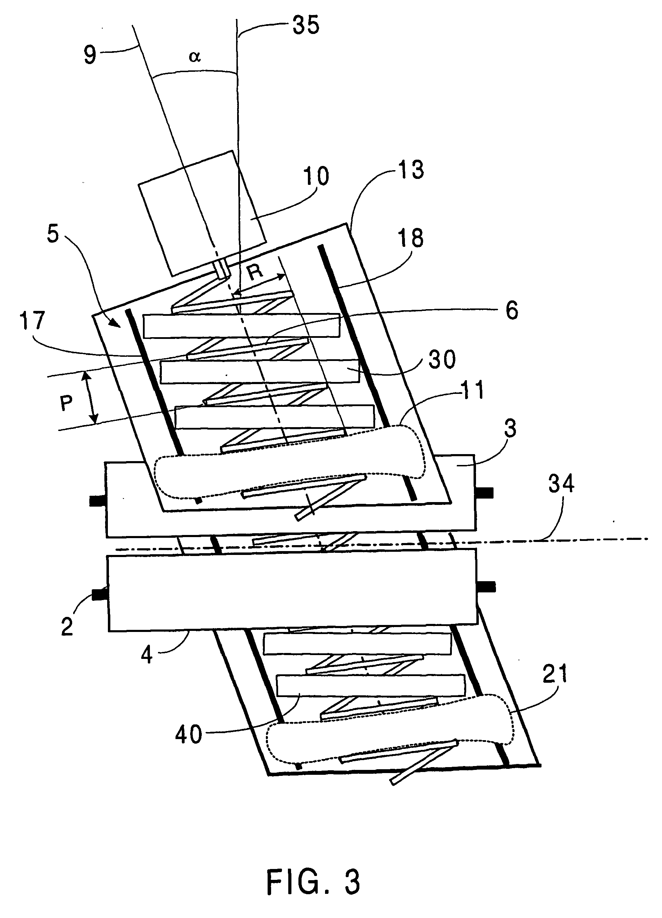

Selon une autre caractéristique de l'invention, le grille-pain (1) peut être équipé d'un second élément rotatif (20) en forme d'hélice, destiné à assurer la récupération des tranches de pain après leur passage dans les moyens de chauffage (2). Plus précisément, ce second élément rotatif (20) peut être identique au premier, tel qu'illustré notamment aux figures 2 et 3, sans que cela soit obligatoire. La figure 1 montre, à ce titre, un second élément rotatif monté en sens inverse du premier. Ce second élément (20) rotatif définit également une pluralité de logements (21) entre chacune de ses spires (22), dont une est située (23) directement à l'aplomb des moyens de chauffage (2). Ce second élément rotatif (20) est également associé à un moteur (24) qui permet d'assurer la rotation dans un sens provoquant l'avancée des tranches de pain qui sont stockées.

Dans la forme illustrée à la figure 1, le second chargeur (25) permet d'acheminer les tranches de pain grillées à destination d'un réceptacle spécifique (26). Néanmoins, ce réceptacle n'est pas obligatoire, et les tranches de pain grillées peuvent être stockées dans le chargeur de sortie (25).

Le schéma de la figure 2 illustre la manière dont les tranches de pain se déplacent depuis le chargeur supérieur vers les moyens de chauffage. Ainsi, lorsque les tranches de pain (30) sont poussées par l'hélice caractéristique (6) en direction des moyens de chauffage (2) selon la direction F₃₀, elles atteignent l'extrémité de cet élément rotatif (6) qui se trouve à l'aplomb des moyens de chauffage (2). Par la suite, et par gravité, les tranches d'extrémité (31) chutent selon la direction F₃₁, jusqu'à ce que leur côté inférieur vienne au contact des rouleaux chauffants (2) qui entraînent les tranches de pain selon le plan de défilement (34).

Ces rouleaux (2) sont entraînés par des moyens qui sont synchronisés de façon appropriée avec le moteur d'entraînement de l'hélice (6) du chargeur supérieur (5). De la sorte, les tranches de pain sont délivrées aux moyens de chauffage lorsque ces derniers ont eu le temps de griller la tranche précédente.

Afin d'entraîner correctement les tranches de pain, les rouleaux 3 et 4 sont entraînés dans des mouvements de rotation, respectivement R₃ et R₄, contrarotatifs.

Le second élément rotatif (20), animé d'un mouvement en rotation R20, permet ensuite de récupérer les tranches de pain grillé (40) au fur et à mesure de leur cuisson, en les déplaçant entre les spires de l'élément rotatif (20), selon une direction F₄₀.

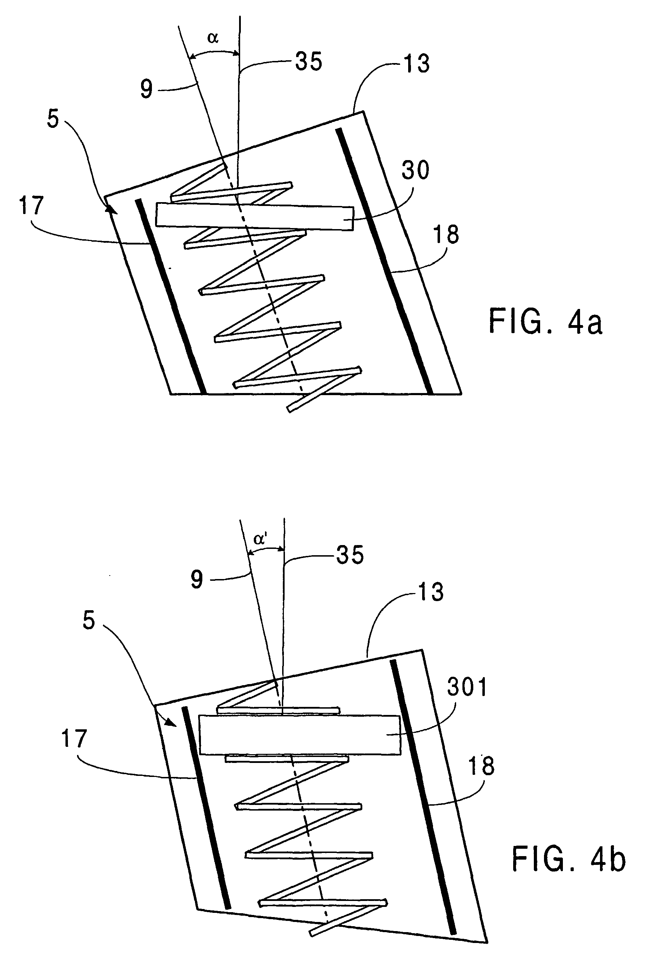

Les figures 3, 4a et 4b illustrent certains détails particuliers de construction destinés à optimiser le fonctionnement du grille-pain.

Ainsi, et comme illustré à la figure 3, l'axe (9) de l'hélice (6) du chargeur supérieur (5) n'est pas perpendiculaire au plan (34) de défilement des tranches à l'intérieur des moyens de chauffage.

En effet, les tranches de pain sont disposées entre les spires de l'hélice. Selon les caractéristiques de l'hélice, et notamment son rayon R et son pas P, mais également selon l'épaisseur des tranches de pain à griller, ces dernières reposent contre les spires et s'orientent selon un certain angle lorsque l'hélice est mise en rotation.

Afin de garantir une introduction correcte des tranches de pain entre les rouleaux, le dispositif est conçu de telle sorte que les tranches de pain progressent dans le chargeur en étant parallèles au plan de défilement (34). Les tranches de pain, lorsqu'elles arrivent à proximité des moyens de chauffage (2), sont donc sensiblement parallèles au plan de défilement (34).

Plus précisément, l'axe (9) de l'hélice (6) forme avec la perpendiculaire (35) au plan de défilement (34) un angle α de l'ordre de 20° environ. Cet angle α correspond donc à l'angle entre l'axe (9) de l'élément rotatif (6) et une perpendiculaire à l'axe des moyens de chauffage (2). Cette disposition permet une bonne introduction des tranches de pain (31) entre les moyens de chauffage sans risque de blocage ou de bourrage. Cet angle α peut donc se déduire de la mesure du pas P et du rayon R de l'hélice (6), ainsi que de l'épaisseur des tranches de pain à griller.

La figure 4a reprend en partie la figure 3 et montre l'orientation α de l'axe (9) de l'hélice (6) avec la perpendiculaire (35) au plan d'avancée des tranches de pain (30) (sensiblement identique au plan de défilement du pain entre les rouleaux).

En disposant des tranches de pain (301) d'épaisseur plus importante que les tranches (30), tel qu'illustré à la figure 4b, lesdites tranches s'orientent alors différemment des tranches (30). Il est donc nécessaire, pour que l'avancée des tranches de pain reste parallèle au plan de défilement du pain entre les rouleaux, de diminuer l'angle que fait l'axe (9) de l'hélice (6) avec la perpendiculaire (35) au plan d'avancée des tranches de pain (301) à une valeur α', comparativement à l'angle α de la figure 4a.

Dans une version simplifiée de l'invention, cet angle est fixe et résulte d'un compromis qui est fonction essentiellement de l'épaisseur de pain la plus utilisée, selon les habitudes alimentaires. Il est donc parfaitement concevable de particulariser les produits selon les pays de commercialisation.

Avantageusement, afin d'assurer ce parallélisme entre l'avancée du pain et le plan de défilement du pain entre les rouleaux, il peut être prévu un dispositif de réglage angulaire du chargeur relativement au dispositif de chauffage, par exemple par un débattement angulaire centré sur le dispositif de chauffage.

Les mêmes dispositions d'orientation de l'axe de l'hélice peuvent être appliquées au chargeur inférieur (25) assurant la récupération des tranches de pain grillé (40).

Pour améliorer le déplacement des tranches, on peut prévoir des guides latéraux (17, 18) disposés de part et d'autre de l'hélice (6). Ces guides latéraux (17, 18) évitent aux tranches de pain de se déplacer latéralement, et de quitter l'hélice (6). Ces guides latéraux (17, 18) peuvent alors avantageusement être réglables en largeur pour s'adapter à différents types de tranches de pain.

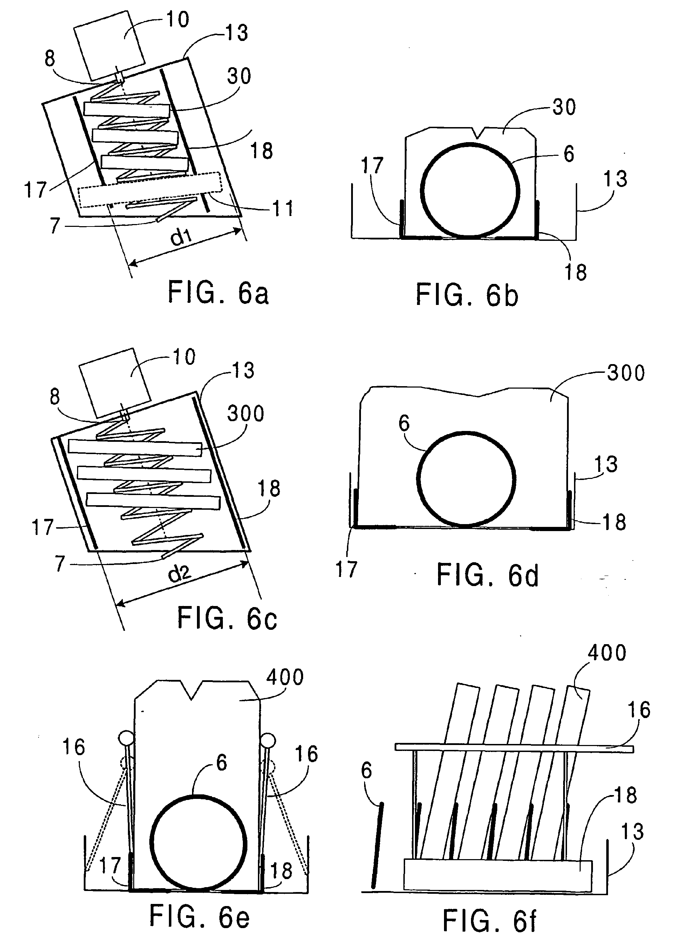

Les figures 6a à 6d illustrent ce principe. Les figures 6a et 6c montrent, dans une vue de dessus, deux positions des guides (17, 18) selon la taille des tranches de pain (30, 300), qui aboutit à un écartement entre les guides, respectivement noté d₁, d₂. Les figures 6b, 6d sont des vues de face du dispositif, correspondant, respectivement aux figures 6a et 6c.

La hauteur de ces guides latéraux (17, 18) est déterminée en fonction de la hauteur des tranches de pain susceptibles d'être grillées par le grille-pain conforme à l'invention. Pour certains modèles, le chargeur d'entrée peut comporter également des butées anti-basculement destinées à venir au contact des tranches dans leur partie haute, pour éviter que ces dernières ne basculent latéralement.

Les figures 6e, 6f montrent, dans une vue de face et une vue de profil, de telles butées, qui peuvent être directement associées aux guides latéraux (17, 18), ou bien encore être solidaires du carénage (13) du chargeur (5), tel que représenté en pointillés, et permettent la tenue latérale de tranches de pain (400) de hauteur importante.

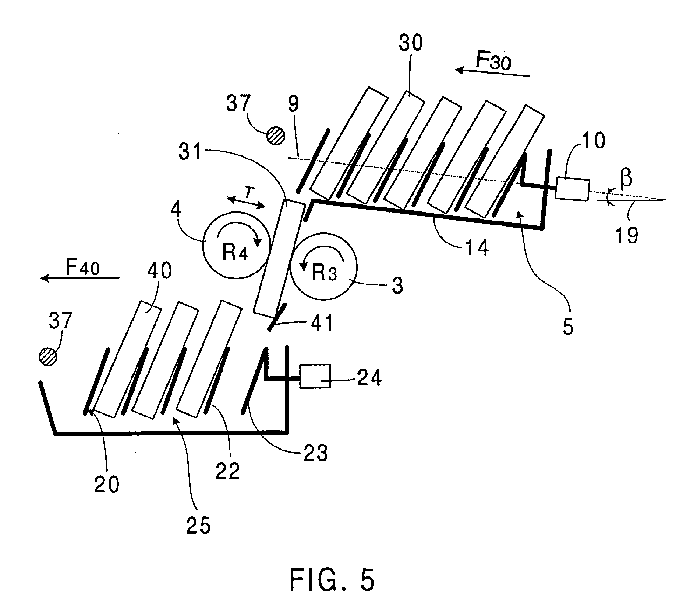

L'axe (9) de l'hélice (6) peut également être orienté dans un plan vertical, comme illustré à la figure 5. Dans cette configuration, l'axe (9) de l'hélice (6) forme un angle β avec l'horizontale (19). L'axe (9) de l'hélice (6) et donc la plaque inférieure (14) du chargeur supérieur (5) sont légèrement orientés vers le haut dans le sens de déplacement des tranches de pain.

De la sorte, les tranches de pain (30) sont plus inclinées par rapport à la verticale que si l'axe (9) de l'hélice était exactement horizontal.

Ainsi, le glissement des tranches de pain (30), lorsque celles-ci arrivent en bout de l'hélice (6), se fait sans risque de basculement. Ce risque de basculement est fortement diminué par la présence d'une butée (37) transversale située à l'extrémité du chargeur supérieur (5), comme illustré à la figure 5.

Ainsi, parvenues en bout du chargeur supérieur (5), les tranches de pain d'extrémité (31) glissent par gravité jusqu'à venir au contact des deux rouleaux chauffants (3, 4). Le mouvement de ces deux rouleaux (3, 4) entraîne alors ladite tranche de pain (31) à une vitesse appropriée pour qu'elle soit grillée selon le degré de cuisson choisi.

A la sortie des rouleaux de chauffage (3, 4), la tranche de pain rencontre un déflecteur (41) qui l'oriente en direction de la seconde hélice (20), entre deux spires (22) consécutives. Le chargeur inférieur (25) peut être motorisé de façon synchronisée avec les rouleaux chauffants (3, 4). Les tranches de pain grillées (40) sont accumulées dans des logements consécutifs du chargeur inférieur (25).

Dans la forme illustrée aux figures 1 à 4, les moyens de chauffage sont constitués de rouleaux chauffants (3, 4). Chaque rouleau chauffant peut inclure un organe de chauffage du type résistance blindée ou résistance au quartz. Il peut également s'agir de résistances bobinées sur stéatite ou alors sur samicanite, ou plus généralement tout type de résistances chauffantes aptes à rayonner. Ces organes chauffants peuvent être inclus dans un rouleau grillagé permettant à la fois l'entraînement des tranches de pain, et le passage de l'énergie de rayonnement.

Les moyens de chauffage peuvent être également réalisés par des rouleaux chauffants incluant une résistance blindée. Dans une forme avantageuse, un des rouleaux peut être lisse, recouvert d'une couverture compatible avec le contact alimentaire. L'autre rouleau peut avantageusement être recouvert d'un treillis qui permet une bonne évacuation de la vapeur d'eau générée lors de la phase de cuisson. On obtient ainsi un pain plus croustillant.

En pratique, au moins un rouleau de chauffage (3, 4) peut être mobile par rapport à l'autre pour accepter différentes épaisseurs de pain tout en venant au contact des tranches de pain à griller. Illustré à la figure 5, le rouleau (4) peut ainsi se déplacer transversalement selon la direction T. Ces rouleaux peuvent être associées à des moyens de rappel permettant d'assurer une pression appropriée sur les tranches de pain. Il est bien entendu également envisageable, dans le cadre de l'invention, de rendre les deux rouleaux de chauffage (3, 4) mobiles l'un par rapport à l'autre.

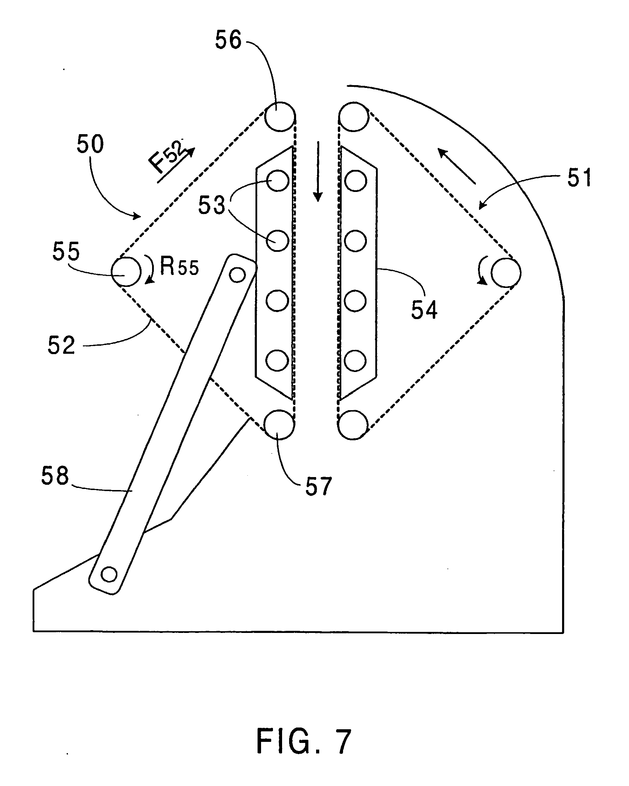

Une variante des moyens de chauffage est illustrée à la figure 7, dans laquelle on observe que les moyens de chauffage comprennent deux ensembles symétriques (50, 51) comprenant un tapis perforé (52) circulant dans le sens de défilement des tranches, ainsi qu'une rampe de résistances (53) chauffantes. Ces résistances chauffantes (53) peuvent être, comme déjà évoqué, des résistances blindées, des résistances au quartz ou des résistances bobinées sur stéatite ou samicanite. Le nombre de ces résistances (53) peut être adapté en fonction de la puissance du modèle de grille-pain. Leur nombre n'est donc pas limité aux quatre résistances illustrées à la figure 7. Ces résistances (53), qui fonctionnent par rayonnement, peuvent avantageusement être disposées à l'avant d'un réflecteur métallique (54) destiné à augmenter la puissance de chauffe. Le tapis (52) qui permet l'entraînement des tranches de pain peut être réalisé à partir d'un treillis métallique ou de plaques à chaînes, ou encore de tapis à toile, chaînette ou à toile câblée.

Au moins un des ensembles de chauffage (50, 51) est relié à un bras de rappel (58) assurant le placage des moyens de chauffage sur les tranches de pain à griller.

Dans la forme illustrée à la figure 7, le tapis défilant (52) est entraîné, selon la direction F₅₂, par un rouleau moteur (55) mis en rotation dans le sens horaire R₅₅, et passe sur deux rouleaux libres en rotation (56, 57). Bien entendu, l'invention n'est pas limitée à cette seule forme de réalisation, mais couvre également les variantes dans lesquelles le nombre de rouleaux entraînant le tapis est réduit à deux.

Dans une forme moins perfectionnée, les moyens de chauffage peuvent n'inclure qu'un seul ensemble de chauffage et donc une seule rampe de résistances chauffantes, et un simple tapis défilant. La face opposée des tranches de pain n'est donc pas chauffée, mais reçoit simplement le contact du tapis défilant.

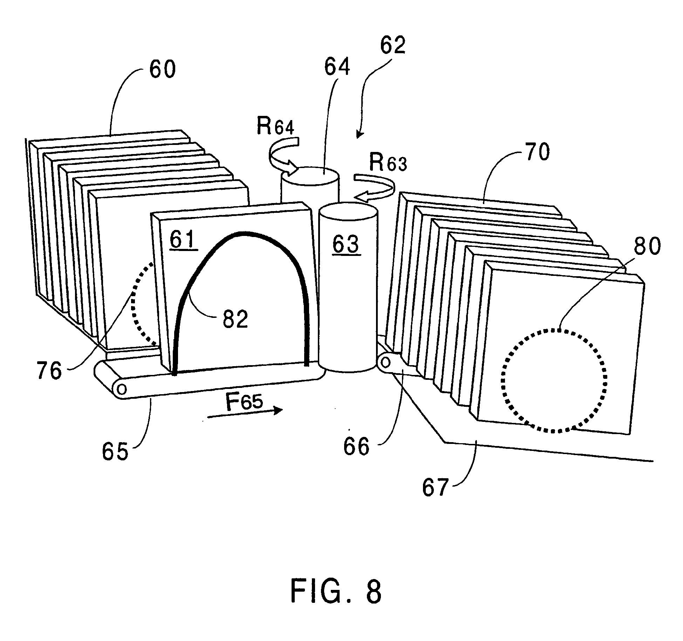

Comme déjà évoqué, l'invention n'est pas limitée à la seule configuration illustrée aux figures 1 à 7 dans lesquelles les tranches de pain défilent verticalement à l'intérieur des moyens de chauffage. Au contraire, elle couvre également des variantes qui ne sont pas décrites ici en détail mais simplement représentées schématiquement à la figure 8.

Dans ce cas, les tranches de pain peuvent circuler horizontalement à l'intérieur des moyens de chauffage. Un premier chargeur achemine les différentes tranches de pain (60) à proximité des moyens de chauffage grâce à une hélice (76). Grâce au déroulement d'un tapis d'entrée (65) selon la direction F₆₅, les tranches d'extrémité (61) sont introduites entre les moyens de chauffage par un côté vertical. Une butée de maintien (82) positionne correctement les tranches de pain (61) en face des moyens de chauffage. Ces moyens de chauffage sont constitués, pour l'exemple, de deux rouleaux (63, 64) verticaux, animés de mouvement contrarotatifs, respectivement R₆₃, R₆₄.

Les tranches de pain défilent donc horizontalement entre les rouleaux de chauffage. Elles sont ensuite acheminées vers un chargeur de sortie (67), grâce à un tapis de sortie (66) situé à proximité des moyens de chauffage (62) et se déroulant selon une direction voisine de celle du tapis d'entrée (65). Les tranches grillées sont ensuite stockées, par une hélice (80), dans le chargeur de sortie (67).

Il ressort de ce qui précède que le grille-pain perfectionné conforme à l'invention présente de multiples avantages, et notamment celui de permettre une alimentation automatique, qui peut par exemple être programmée, avec un grand nombre de tranches de pain. La conception du chargeur d'alimentation est telle qu'elle est compatible avec différentes épaisseurs et géométries de tranches de pain.

Le grillage peut être réalisé en continu si le chargeur supérieur est alimenté régulièrement. Néanmoins, ce grille-pain est également apte à griller une seule tranche si nécessaire. En outre, le grille-pain conforme à l'invention peut comporter plusieurs mécanismes de chargeurs et de chauffage juxtaposés, pour être compatibles avec différents types de tranches de pain.

## Revendications

1. Grille-pain automatique, comprenant :
- des moyens de chauffage (2) devant lesquels défilent les tranches de pain à griller,
- des moyens pour acheminer des tranches de pain vers les moyens de chauffage,
**caractérisé en ce que** lesdits moyens pour acheminer les tranches de pain vers les moyens de chauffage sont distincts et séparés des moyens de chauffage en étant situés en amont de ces derniers, et comprennent un élément rotatif (6) épousant une forme géométrique d'hélice, définissant une pluralité de logements (11) pour des tranches de pain (30), lesdits logements (11) possédant une longueur correspondant sensiblement au pas P de l'hélice (6).

2. Grille-pain selon la revendication 1, **caractérisé en ce que** les moyens de chauffage (2) comportent des moyens d'entraînement (52) en défilement des tranches de pain.

3. Grille-pain selon la revendication 2, **caractérisé en ce que** le défilement des tranches de pain (31) s'effectue verticalement.

4. Grille-pain selon la revendication 2, **caractérisé en ce que** le défilement des tranches de pain (61) s'effectue horizontalement.

5. Grille-pain selon la revendication 2 ou 3, **caractérisé en ce que** l'axe (9) de l'hélice (6) est incliné dans un plan horizontal d'un angle α non nul par rapport à une perpendiculaire (35) au plan de défilement (34) des tranches de pain dans les moyens de chauffage (2).

6. Grille-pain selon la revendication 3, **caractérisé en ce que** l'axe (9) de l'hélice (6) est incliné dans un plan vertical d'un angle β non nul par rapport à l'horizontale (19).

7. Grille-pain selon la revendication 1, **caractérisé en ce que** les moyens d'acheminement incluent une butée (37) située à l'extrémité de l'élément rotatif (6), apte à empêcher le basculement des tranches de pain (31) lorsque ces dernières atteignent l'extrémité dudit élément rotatif (6).

8. Grille-pain selon la revendication 1, **caractérisé en ce qu'**il comporte également des moyens (25) pour stocker des tranches de pain issues des moyens de chauffage.

9. Grille-pain selon la revendication 8, **caractérisé en ce que** les moyens pour stocker les tranches de pain grillées (40) vers le réceptacle sont formés par un second élément rotatif (20) à forme géométrique d'hélice.

10. Grille-pain selon la revendication 1, **caractérisé en ce que** les moyens de chauffage (2) comprennent au moins un organe chauffant par rayonnement (53), et un convoyeur (52) apte à transporter les tranches de pain devant ledit organe chauffant (53).

11. Grille-pain selon la revendication 1, **caractérisé en ce que** les moyens de chauffage comprennent au moins un rouleau chauffant (3, 4) au contact duquel viennent les tranches de pain (30), ledit rouleau chauffant étant apte à entraîner les tranches de pain.

## Claims

1. An automatic toaster comprising:
· heater means (2) past which slices of bread for toasting travel; and
· conveyor means for conveying the slices of bread towards the heater means,
the toaster being **characterized in that** said conveyor means for conveying the slices of bread towards the heater means are distinct and separate from the heater means, being situated upstream therefrom, and comprise a rotary element (6) that is geometrically helical in shape, defining a plurality of housings (11) for slices of bread (30), said housings (11) being of a length that corresponds substantially to the pitch P of the helix (6).

2. A toaster according to claim 1, **characterized in that** the heater means (2) include drive means (52) for driving the slices of bread therethrough.

3. A toaster according to claim 2, **characterized in that** the slices of bread (31) pass through the heater means vertically.

4. A toaster according to claim 2, **characterized in that** the slices of bread (61) pass through the heater means horizontally.

5. A toaster according to claim 2 or claim 3, **characterized in that** the axis (9) of the helix (6) is inclined in a horizontal plane at a non-zero angle α relative to a perpendicular (35) to the travel plane (34) of the slices of bread through the heater means (2).

6. A toaster according to claim 3, **characterized in that** the axis (9) of the helix (6) is inclined in a vertical plane at a non-zero angle β relative to the horizontal (19).

7. A toaster according to claim 1, **characterized in that** the conveyor means include an abutment (37) situated at the end of the rotary element (6) suitable for preventing the slices of bread (31) from toppling when they reach the end of said rotary element (6).

8. A toaster according to claim 1, **characterized in that** it also includes means (25) for storing slices of toast coming from the heater means.

9. A toaster according to claim 8, **characterized in that** the means for storing slices of toast (40) going towards the receptacle are formed by a second rotary element (20) of geometrically helical shape.

10. A toaster according to claim 1, **characterized in that** the heater means (2) comprise at least one heater member that heats by radiation (53), and a conveyor (52) suitable for conveying slices of bread past said heater member (53).

11. A toaster according to claim 1, **characterized in that** the heater means comprise at least one heater roller (3, 4) that comes into contact with the slices of bread (30), said heater roller being suitable for driving the slices of bread.

## Patentansprüche

1. Automatischer Toaster mit:
- Heizmitteln (2), vor denen die zu röstenden Brotscheiben vorbeigeführt werden,
- Mitteln zum Transportieren von Brotscheiben zu den Heizmitteln,
**dadurch gekennzeichnet, dass** sich die Mittel zum Transportieren der Brotscheiben zu den Heizmitteln von den Heizmitteln unterscheiden und von diesen getrennt sind, indem sie stromaufwärts dieser Mittel angeordnet sind, und dass sie ein Drehelement (6) aufweisen, das die geometrische Form einer Spirale annimmt, die eine Vielzahl von Aufnahmen (11) für Brotscheiben (30) begrenzt, wobei die Aufnahmen (11) eine Länge haben, die im Wesentlichen der Steigung P der Schraube (6) entspricht.

2. Toaster nach Anspruch 1, **dadurch gekennzeichnet, dass** die Heizmittel (2) Mittel (52) aufweisen, die die Brotscheiben so antreiben, dass sie vorbeigeführt werden.

3. Toaster nach Anspruch 2, **dadurch gekennzeichnet, dass** das Vorbeiführen der Brotscheiben (31) vertikal erfolgt.

4. Toaster nach Anspruch 2, **dadurch gekennzeichnet, dass** das Vorbeiführen der Brotscheiben (61) horizontal erfolgt.

5. Toaster nach Anspruch 2 oder 3, **dadurch gekennzeichnet, dass** die Achse (9) der Schraube (6) in Bezug auf eine Senkrechte (35) zur Ebene (34) des Vorbeiführens der Brotscheiben in den Heizmitteln (2) in einer horizontalen Ebene um einen Winkel α, der ungleich null ist, geneigt ist.

6. Toaster nach Anspruch 3, **dadurch gekennzeichnet, dass** die Achse (9) der Schraube (6) in Bezug auf die Horizontale (19) in einer vertikalen Ebene um einen Winkel β, der ungleich null ist, geneigt ist.

7. Toaster nach Anspruch 1, **dadurch gekennzeichnet, dass** die Transportmittel einen Anschlag (37) aufweisen, der sich am Ende des Drehelements (6) befindet und das Kippen der Brotscheiben (31) verhindern kann, wenn diese das Ende des Drehelements (6) erreichen.

8. Toaster nach Anspruch 1, **dadurch gekennzeichnet, dass** er auch Mittel (25) zum Lagern von Brotscheiben aufweist, welche von den Heizmitteln kommen.

9. Toaster nach Anspruch 8, **dadurch gekennzeichnet, dass** die Mittel zum Lagern der gerösteten Brotscheiben (40) am Auffangbehälter durch ein zweites Drehelement (20) mit der geometrischen Form einer Spirale gebildet sind.

10. Toaster nach Anspruch 1, **dadurch gekennzeichnet, dass** die Heizmittel (2) mindestens ein Organ (53), das durch Strahlung heizt, und eine Transporteinrichtung (52) aufweisen, die die Brotscheiben vor das Heizorgan (53) transportieren kann.

11. Toaster nach Anspruch 1, **dadurch gekennzeichnet, dass** die Heizmittel mindestens eine Heizrolle (3, 4) aufweisen, mit der die Brotscheiben (30) in Kontakt gelangen, wobei die Heizrolle die Brotscheiben antreiben kann.
